# EUROPEAN PATENT SPECIFICATION

(11) **EP 0 360 495 B1**
(45) Date of publication and mention of the grant of the patent: **20.04.1994**
(21) Application number: 89309337.7
(22) Date of filing: 14.09.1989
(51) Int. Cl.: B65B 43/54, G01G 13/24, G01G 15/00

(54) **Filling containers**
Füllen von Behältern
Remplissage de réservoirs

(30) Priority: 20.09.1988 GB 8822109
(43) Date of publication of application: 28.03.1990
(73) Proprietor: Kendall, Thomas David, Bristol BS14 9AL (GB); Kendall, Margaret Joyce, Bristol BS14 9AL (GB)
(72) Inventor: Kendall, Thomas David, Bristol BS14 9AL (GB); Badder, Peter Thomas, Slough Berkshire SL1 1QW (GB)
(74) Representative: Linn, Samuel Jonathan

(56) References cited:
- GB-A- 1 163 111
- GB-A- 2 060 910
- GB-A- 2 105 479
- GB-A- 2 157 009
- US-A- 3 817 340

## Description

This invention relates to apparatus for filling containers with predetermined quantities of materials at two container positions which are to be fed alternately with said material, comprising:
a material guide arrangement having alternative outlets to containers at the two container positions, and means for directing material first to one of said outlets and then to the other of said outlets and vice versa, in each case until a predetermined quantity of material has been delivered therethrough;
a pair of container support frames which extend side by side at the respective container positions, each container support frame being mounted onto the front of a frame of the appartus by respective upper and lower support arms which are pivotally joined to upper and lower positions on the respective container support frame as well as being pivotally mounted onto the frame so as to form parallelogram linkages for the support frames, with counterbalance means for each support frame coupled to its respective support arm rearwardly of the pivotal connection of said support arm to said frame;
operative means attached to an upper end of each of the support frames and acting upon the means for directing material alternately to said outlets so as mechanically to change the position of the latter when the weight of the material in the container being filled at the one container position overbalances the associated counterbalance means and causes the respective support frame to move downwardly, thus commencing feeding of said material into the container at the other container position.

Apparatus of this type is disclosed in GB-A-2105409.

It is an object of this invention to improve such container filling apparatus in various respects including switching of feeding between alternative outlets to container positions, container support provisions in themselves, and relationship of those support provisions to main framework to aid handling of the apparatus as a whole.

According to this invention, apparatus of the type specified in the first paragraph hereto is characterised in the manner specified in claim 1.

Preferably, apparatus of the kind concerned has its means for directing material alternately to said outlets in the form of a diverter pivotally mounted about a pivot axis in the material guide arrangement between a material inlet above said diverter and said material outlets positioned below said diverter and spaced on opposite sides of a vertical line passing through the pivot axis of said diverter.

Advantageously, in apparatus of the kind concerned each of the support frames includes upper and lower vertical mounting members disposed rearwardly of the container positions, and pivotally mounted onto the pivotal support arms.

These vertical mounting members preferably extend upwardly into a casing of the apparatus.

In preferred embodiments, each lower vertical mounting member has a rearwardly extending portion connected to an upwardly extending portion that is pivotally journalled to the associated lower support arm. Furthermore, each upper vertical mounting member may be arranged within an overhanging head part of the casing of the apparatus, and may have a rearwardly extending part joined to its support frame and a downwardly extending part journalled to the associated upper support arm.

The aforesaid provisions can help avoid foreign particles entering the apparatus casing particularly where entries are protected by seals or gaskets, say of bellows or concertina type. Similar seals or gaskets should also be fitted to the diverter shaft and any other entry/exit of the casing.

Rearward extensions of or from the support arms at the lower and/or upper mounting provisions beyond their pivots to the front frame members carry or have associated therewith suitable counterweighting provisions, preferably as a target weight for the lower rearward extensions and, as further adjustments to correct the desired quantity, at the upper rearward extensions.

Suitable counterweighting provisions include target and coarse/fine quantity (mass) setting means slidable along scale beams constituting said rearward extensions of or from the support arms and/or weigh pans associated for target weight support purposes directly or indirectly with the support arms.

Advantageously, in apparatus of the kind concerned the main frame includes a bottom frame member having support legs extending downwardly therefrom, and wherein said bottom frame member is supported at a level above the container positions.

This contributes to ease of transporting of the apparatus since the frame legs give ample clearance for insertion of a fork-lift to engage the bottom frame member.

Specific implementation of the invention will now be described by way of example with reference to the accompanying diagrammatic drawings, in which
Figure 1 is a front elevation of one embodiment of container loading apparatus;
Figure 2 is a similar view with front casing removed concentrating on alternating material guide provisions;
Figure 2A shows variant detail;
Figure 3 is a vertical section from front to back showing main frame, support frame counterweighting and material supply;
Figure 3A shows variant detail; and
Figures 4A and 4B are outline part sections on lines A-A and B-B of Figure 3.

In the drawings, apparatus of the kind concerned comprises a main frame 10 having a base 12 with forward and rearward legs 12A and 12B, the former (12A) shown extending forwardly as well as downwardly to support beams 13A and 13B. The main frame 10 also includes a bottom frame member 14 which supports front and rear frame portions in the form of vertical subframes 16 and 18 (not shown in Figure 4) within a casing 20. Ajustable feet 22A,B and rollers or wheels 23A,B are shown for the beams 13A,B.

A pair of container support frames 24,26 are shown of basic T-configuration with stems 24S,26S vertical in front of the main part 20M of the casing 20 and a shield plate 25 between the front legs 12A, and heads 24H,26H within a forwardly overhanging head 20H of the casing 20. The stems 24S,26S have spaced lower mounting provisions extending at ends of horizontal bars 28B rearwardly at 28R and upwardly at 28U into protruding housing parts 20P by way of foreign particle excluding gaskets 28G. Free ends of the lower mounting parts 28U are journalled at pivots 30 to ends of support arms 32 extending from pivots 34 carried by the front frame portion 16. The heads 24H,26H have upper mounting provisions extending rearwardly at 38R and downwardly at 38D, and the stems 24S,26S enter the overhung casing head 20H through foreign particle excluding gaskets 38G. Free ends of the upper mounting parts 38D are journalled at pivot 40 to ends of support arms 42 extending from pivots 44 carried by the front frame portion 16.

It will be appreciated that the container support frames 24,26 can move up and down on the main frame 10, specifically the front frame portions 16, by virtue of the pivotal support arms 32,42. Base or bottom supports for containers to be loaded can be affixed to the stems 24S,26S in any convenient way.

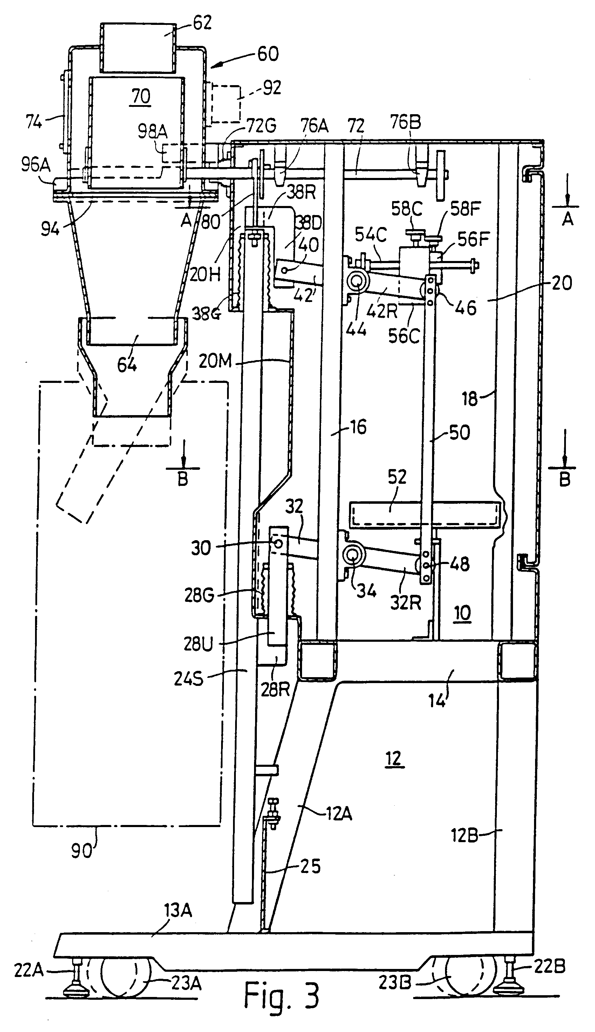

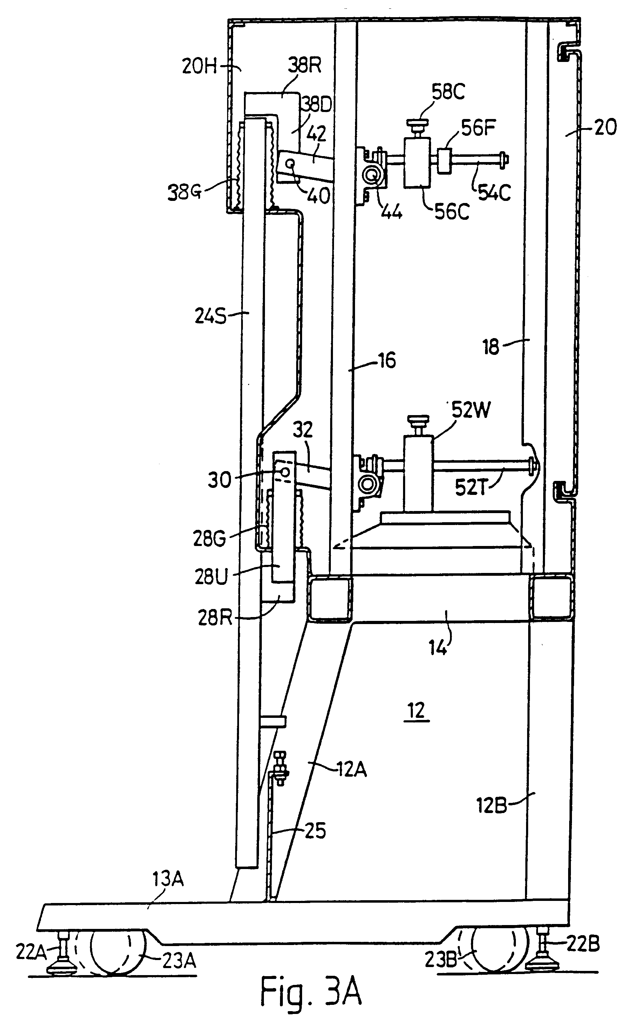

Figs. 3, 4A and 4B show those pivotal support arms 32,42 extended at 32R,42R rearwardly of their pivots 34,44 to free ends journalled at 46,48 to a rigid frame thereby 50 making a parallelogram linkage relative to the pivots 34,44. Counterweighting is indicated as being by way of a lower weigh pan 52 secured to the frame 50 and upper coarse and fine scale beams 54C,54F graduated and having slidable weights 56C,56F and lockable means 58C,58F therealong.

Figure 3A shows a variant omitting the frame 50, the weigh pan 52, and the rearward extensions 32R, 42R of the support arms 32,42. Instead, there is a target weight scale beam 52T extending rearwardly of the support arm 32 with an associated lockable target weight 52W.

Material can be fed to the apparatus in any convenient way, for example conveyors to a material guide arrangement 60 that has a single inlet 62 and alternative spaced outlets 64 and 66, one for each of container positions corresponding to the support frames 24 and 26, shown centred on the stems 24S,26S. The material guide arrangement 60 includes a diverter 70 keyed to a shaft 72 and capable of swinging according to rotation of that shaft 72 between positions in which it deflects material to one or the other of the outlets 64 and 66. The shaft 72 is on the centre-line of the inlet 62 mid-way between centre lines of the outlets 64,66 and the diverter 70 is of narrow upwardly tapering triangular section with the shaft 72 conveniently nearer its bottom than its top. The arrangement 60 conveniently has a removable and replaceable cover plate 74 for access to the diverter 70.

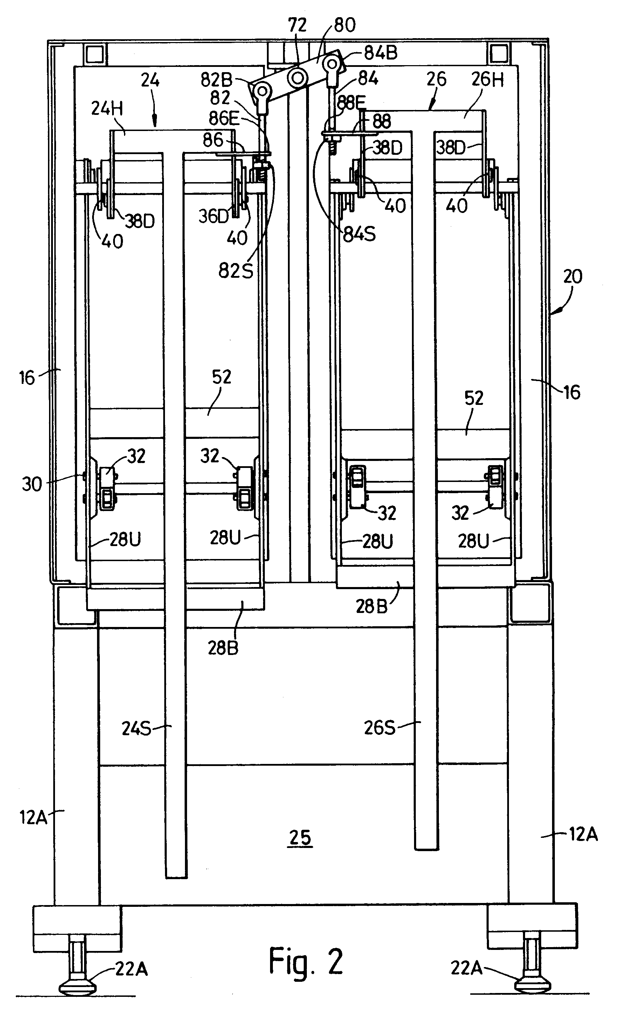

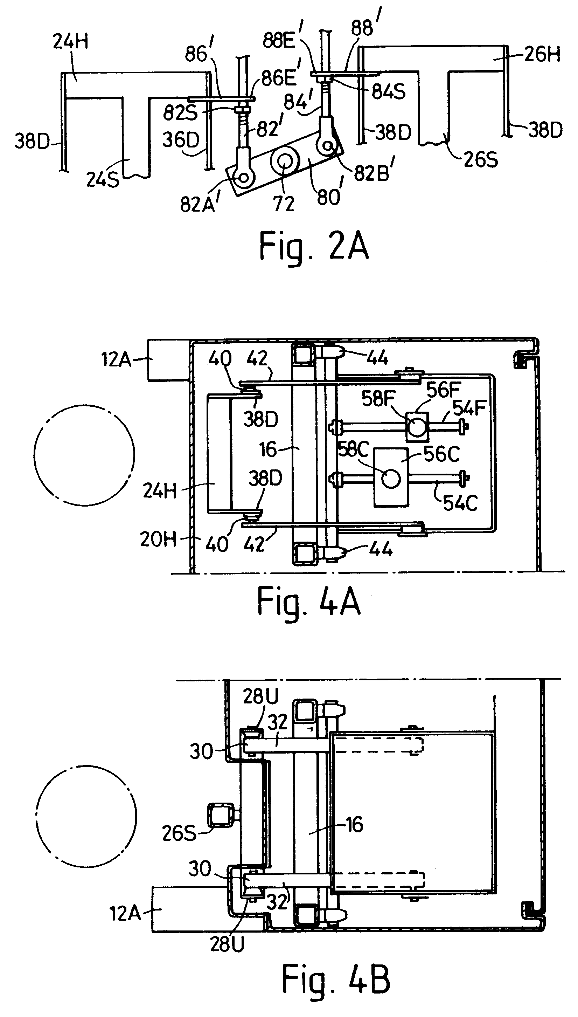

The shaft 72 is journalled at 76A,B to the main frame 10 where it extends horizontally rearwardly into the casing 20. Also keyed to the shaft 72 is a see-saw beam 80 shown in Figure 2 of a length barely greater than the spacing between the support frames 24,26. Connecting rods 82,84 are journalled at 82B,84B to ends of the see-saw beam 80 and slide in ends 86E,88E of parts 86,88 extending from heads 24H,26H of the support frames 24,26 and cooperating with stops 82S,84S on the connecting rods 82,84. Figure 2A shows a variant with the see-saw beam 80' below the extending parts 86,88' and all reference numerals are primed.

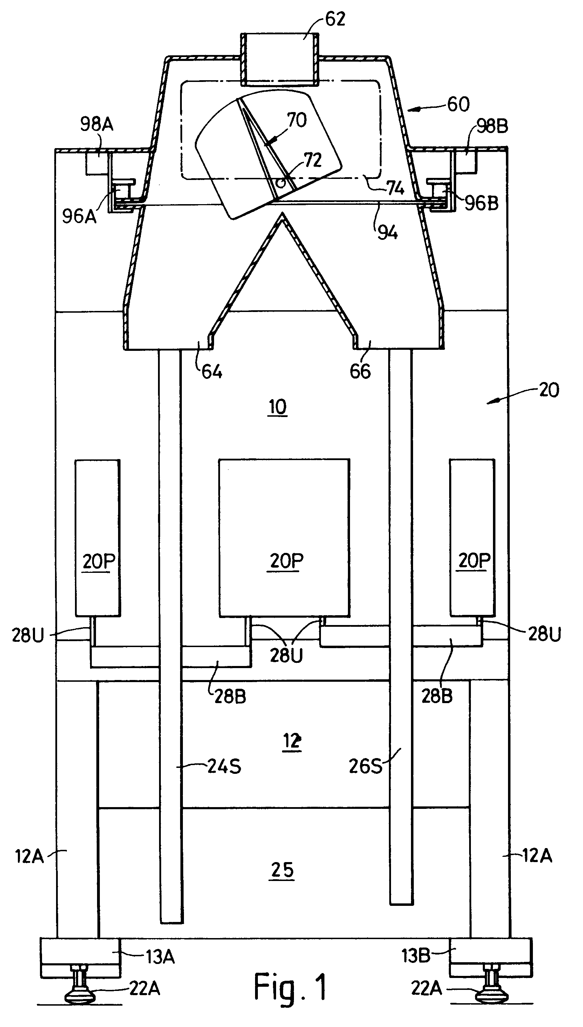

In operation, one of the support frames 24,26 must be up and the other down, as seen in Figs. 1 and 2. Containers on some suitable further supports, say sack bins 90 fastened onto the frames 24,26, are filled alternately while the corresponding frame is up until its contents overcome the counterweighting. Then, the frames 24,26 reverse and the diverter 70 swings to direct material flow into the other container, i.e. containers are automatically filled alternately and the operator merely has to replace filled containers with empty ones. Any desired feed aids can be fitted to the outlets 62 and 64, as shown in Fig. 3.

The gaskets 28G,38G assure that the casing 20 is dust free inside, and a gasket 72G is also shown for sealing the shaft 72. Also, a dust extractor unit 92 may be fitted to the material guiding arrangement 60 itself shown removably held in an apertured frame 94 on spaced arms 96A,B fixed to retainers 98A,B.

## Claims

1. Apparatus for filling containers with predetermined quantities of materials at two container positions which are to be fed alternately with said material, comprising:
a material guide arrangement (60) having alternative outlets (64, 66) to containers at the two container positions, and means (70, 72) for directing material first to one of said outlets and then to the other of said outlets and vice versa, in each case until a predetermined quantity of material has been delivered therethrough;
a pair of container support frames (24, 26) which extend side by side at the respective container positions, each container support frame being mounted onto the front of a frame (10, 16, 18) of the appartus by respective upper and lower support arms (32, 42) which are pivotally joined (at 30, 40)to upper and lower positions on the respective container support frame (24, 26) as well as being pivotally mounted (at 34, 44) onto the frame so as to form parallelogram linkages for the support frames (24, 26), with counterbalance means (52-58) for each support frame coupled to at least one of its support arms rearwardly of the pivotal connection (at 34 or 44) of said support arm to said frame;
operative means (82-88) attached to an upper end of each of the support frames (24, 26) and acting upon the means for directing material (70) alternately to said outlets (64, 66) so as mechanically to change the position of the latter when the weight of the material in the container being filled at the one container position overbalances the associated counterbalance means (52-58) and causes the respective support frame (24, 26) to move downwardly, thus commencing feeding of said material into the container at the other container position characterised in that a respective vertical rigid connecting member (50) is pivotally journalled (at 46, 48) to associated ones of the upper and lower support arms (42, 32) rearwardly of the pivotal connection (at 44, 34) of said support arms (42, 32) to the frame (16) to form a further parallelogram linkage with said support arms and said frame member.

2. Apparatus according to Claim 1 wherein said material guide arrangement (60) has an overall vertical extent, and said operative means (82,84) are positioned entirely within said overall vertical extent.

3. Apparatus according to Claim 2 wherein said operative means consist of parts (86, 88) connected at upper ends of the support frames (24, 26) above the container positions, and push rods (82, 84) which are connected to the means for directing material (70) and which are displaced by movement of said parts (86, 88) to redirect flow of said material from one outlet (64, 66) to the other.

4. Apparatus according to any preceding claim wherein the means for directing material includes a diverter (70) pivotally mounted about a pivot axis (72) in the material guide arrangement (60) between a material inlet (62) above said diverter and said material outlets (64, 66) positioned below said diverter and spaced on opposite sides of a vertical line passing through the pivot axis of said diverter.

5. Apparatus according to any preceding claim wherein each of the support frames (24, 26) includes upper and lower vertical mounting members (38,28) disposed rearwardly of the container positions, and pivotally mounted onto the pivotal support arms (42, 32).

6. Apparatus according to Claim 5 further comprising a casing (20) enclosing the frame (10, 16, 18), with the upper and lower vertical mounting members (38, 32) extending through respective openings in the casing.

7. Apparatus according to Claim 6 wherein each lower vertical mounting member (28) has a rearwardly extending portion (28R) connected to an upwardly extending portion (28U) that is pivotally journalled (at 30) to the associated lower support arm (32).

8. Apparatus according to Claim 6 or 7 wherein the casing includes an overhanging head portion (20H), and each upper vertical mounting member (38) has a rearwardly extending part (38R) joined to its support frame (24,26) and a downwardly extending part (38D) journalled to the associated upper support arm (42), and wherein the upper vertical mounting members (38) are disposed within the overhanging head portion (20H) of the casing (20).

9. Apparatus according to any of claims 6, 7 or 8 further comprising foreign particle excluding means (38G, 28G) disposed at the openings in the casing (20) through which the upper and lower vertical mounting members (38, 28) extend.

10. Apparatus according to any preceding claim wherein the frame includes a bottom frame member (14) having support legs (12A, 12B) extending downwardly therefrom, and wherein said bottom frame member is supported at a level above the container bottom support positions.

## Patentansprüche

1. Vorrichtung zum Füllen von Behältern mit vorherbestimmten Materialmengen an zwei Behälterpositionen, die abwechselnd mit genanntem Material gefüllt werden sollen, umfassend
eine Materialführungsanordnung (60) mit alternativen Auslässen (64, 66) zu Behältern an den zwei Behälterpositionen und Mittel (70, 72) zum Leiten des Materials zunächst zu einem der genannten Auslässe und danach zum anderen der genannten Auslässe und umgekehrt, bis in beiden Fällen eine vorherbestimmte Materialmenge hindurch befördert wurde;
ein Paar Behälterstützrahmen (24, 26), die sich an den jeweiligen Behälterpositionen Seite an Seite erstrecken, wobei jeder Behälterstützrahmen auf die Vorderseite eines Rahmens (10, 16, 18) der Vorrichtung durch jeweilige obere und untere Stützträger (32, 42) montiert ist, die schwenkbar (bei 30, 40) an oberen und unteren Positionen auf dem jeweiligen Behälterstützrahmen (24, 26) verbunden sind sowie schwenkbar (bei 34, 44) auf dem Rahmen montiert sind, um Parallelogrammverbindungen für die Stützrahmen (24, 26) zu bilden, wobei die Gegengewichtsmittel (52-58) für jeden Stützrahmen zumindest an einen seiner Stützträger hinter der Schwenkverbindung (bei 34 oder 44) des genannten Stützträgers mit genanntem Rahmen gekoppelt sind;
Betriebsmittel (82-88), die an einem oberen Ende jedes Stützrahmens (24, 26) angebracht sind und auf die Mittel zum abwechselnden Leiten des Materials (70) zu genannten Auslässen (64, 66) wirken, um die Position der letzteren mechanisch zu ändern, wenn das Gewicht des Materials im an der einen Behälterposition gefüllten Behälter die verbundenen Gegengewichtsmittel (52-58) aus dem Gleichgewicht bringt und eine Bewegung des jeweiligen Stützrahmens (24, 26) nach unten bewirkt, wodurch das Einfüllen des genannten Materials in den Behälter an der anderen Behälterposition beginnt, dadurch gekennzeichnet, daß ein jeweiliges vertikales starres Verbindungslement (50) (bei 46, 48) an zugehörige Elemente der oberen und unteren Stützträger (42, 32) hinter der Schwenkverbindung (bei 44, 34) der genannten Stützträger (42, 32) mit dem Rahmen (16) schwenkbar gelagert ist, um eine weitere Parallelogrammverbindung mit genannten Stützträgern und genanntem Rahmenelement zu bilden.

2. Vorrichtung nach Anpruch 1, worin genannte Materialführungsanordnung (60) eine vertikale Gesamtausdehnung hat und genannte Betriebsmittel (82, 84) völlig innerhalb genannter vertikaler Gesamtausdehnung positioniert sind.

3. Vorrichtung nach Anspruch 2, worin genannte Betriebsmittel aus Teilen (86, 88), die an oberen Enden der Stützträger (24, 26) oberhalb der Behälterpositionen verbunden sind, und Schubstangen (82, 84) bestehen, die mit dem Materialleitungsmittel (70) verbunden sind und die durch Bewegung genannter Teile (86, 88) verschoben werden, um den Fluß des genannten Materials von einem Auslaß (64, 66) zum anderen umzuleiten.

4. Vorrichtung nach einem der vorhergehenden Ansprüche, worin das Materialleitungsmittel eine Ablenkeinrichtung (70) enthält, die um eine Schwenkachse (72) in der Materialführunganordnung (60) zwischen einem Materialeinlaß (62) oberhalb der genannten Ablenkeinrichtung und genannten Materialauslässen (64, 66) montiert ist, die unterhalb der genannten Ablenkeinrichtung positioniert und auf gegenüberliegenden Seiten einer vertikalen Linie in einem Abstand voneinander angeordnet sind, welche Linie durch die Schwenkachse der genannten Ablenkeinrichtung verläuft.

5. Vorrichtung nach einem der vorhergehenden Ansprüche, worin jeder der Stützrahmen (24, 26) obere und untere vertikale Montageelemente (38, 28) enthält, die hinter den Behälterpositionen angeordnet und an den Schwenkstützträgern (42, 32) montiert sind.

6. Vorrichtung nach Anspruch 5, die weiters ein den Rahmen (10, 16, 18) einschließendes Gehäuse umfaßt, wobei sich die oberen und unteren vertikalen Montageelemente (38, 32) durch jeweilige Öffnungen im Gehäuse erstrecken.

7. Vorrichtung nach Anspruch 6, worin jedes untere vertikale Montageelement (28) einen sich nach hinten erstreckenden Abschnitt (28R) aufweist, der mit einem sich nach oben erstreckenden Abschnitt (28U) verbunden ist, der am zugehörigen unteren Stützträger (32) (bei 30) schwenkbar gelagert ist.

8. Vorrichtung nach Anspruch 6 oder 7, worin das Gehäuse einen überstehenden Kopfabschnitt (20H) enthält und jedes obere vertikale Montageelement (38) einen sich nach hinten erstreckenden Teil (38R), der mit seinem Stützrahmen (24, 26) verbunden ist, und einen sich nach unten erstreckenden Teil (38D) aufweist, der am zugehörigen oberen Stützträger (42) gelagert ist, und worin die oberen vertikalen Montageelemente (38) innerhalb des überstehenden Kopfabschnitts (20H) des Gehäuses (20) angeordnet sind.

9. Vorrichtung nach einem der Ansprüche 6, 7 oder 8, die weiters Mittel zum Ausschließen von Fremdteilchen (38G, 28G) umfaßt, die an den Öffnungen im Gehäuse (20) angeordnet sind, durch die sich die oberen und unteren vertikalen Montageelemente (38, 28) erstrecken.

10. Vorrichtung nach einem der vorhergehenden Ansprüche, worin der Rahmen ein Bodenrahmenelement (14) mit Stützfüßen (12A, 12B) enthält, die sich davon nach unten erstrecken, und worin genanntes Bodenrahmenelement auf einer Ebene oberhalb der Behälter-Bodenstützpositionen gestützt wird.

## Revendications

1. Appareil pour remplir des conteneurs avec des quantités prédéterminées de matériaux à deux positions de conteneur, qui doivent être alimentés en alternance, avec ledit matériau comprenant :
un agencement de guidage de matériau (60) présentant des sorties alternatives (64, 66) à des conteneurs aux deux positions de conteneur, et des moyens (70, 72) pour diriger le matériau tout d'abord vers l'une desdites sorties et ensuite vers l'autre desdites sorties et vice versa, dans chaque cas jusqu'à ce qu'une quantité prédéterminée de matériau ait été transmise à travers celles-ci ;
une paire de châssis de supports de conteneur (24, 26) qui s'étendent côte-à-côte aux positions respectives du conteneur, chaque châssis de support de conteneur étant monté sur le devant d'un châssis (10, 16, 18) de l'appareil par des bras de support supérieur et inférieur respectifs (32, 42) qui sont reliés de façon pivotante (en 30, 40) à des positions supérieure et inférieure sur le châssis respectif de support de conteneur (24, 26) ainsi que montés de façon pivotante (en 34, 44) sur le châssis de façon à former des liaisons en parallélogramme pour les châssis de support (24, 26), avec des moyens de contrepoids (52-58) pour chaque châssis de support accouplé à au moins l'un de ses bras de support à l'arrière de la connexion pivotante (en 34 ou 44) dudit bras de support audit châssis ;
des moyens fonctionnels (82-88) fixés à une extrémité supérieure de chacun des cadres de support (24, 26) et agissant sur les moyens pour diriger le matériau (70) en alternance vers lesdites sorties (64, 66) de façon à changer mécaniquement la position de celles-ci lorsque le poids du matériau dans le conteneur en train d'être rempli à une position de conteneur l'emporte sur le moyen de contrepoids associé (52, 58) et amène le châssis de support respectif (24, 26) à se déplacer vers le bas, en commençant ainsi l'amenée dudit matériau dans le conteneur à l'autre position de conteneur, caractérisé en ce qu'un élément de connexion vertical rigide (50), respectif, est monté tourillonnant de façon pivotante (en 46, 48) à des bras de support associés parmi les bras de support supérieur et inférieur (42, 32) à l'arrière de la connexion pivotante (en 44, 34) desdits bras de support (42, 32) au châssis (16) afin de former une liaison en parallélogramme additionnelle avec lesdits bras de support et ledit élément de châssis.

2. Appareil selon la revendication 1, dans lequel ledit agencement de guidage de matériaux (60) présente une étendue verticale d'ensemble, et lesdits moyens fonctionnels (82, 84) sont positionnés entièrement à l'intérieur de ladite étendue verticale d'ensemble.

3. Appareil selon la revendication 2, dans lequel lesdits moyens fonctionnels sont constitués de pièces (86, 88) connectées aux extrémités supérieures des châssis de support (24, 26) au-dessus des positions de conteneur, et des tiges poussoirs (82, 84) qui sont connectées aux moyens pour diriger le matériau (70) et qui sont déplacées par le mouvement desdites pièces (86, 88) pour rediriger l'écoulement dudit matériau d'une sortie (64, 66) à l'autre.

4. Appareil selon l'une des revendications précédentes, dans lequel les moyens pour diriger le matériau comprennent un divertisseur (70) monté de façon pivotante autour d'un axe de pivotement (72) dans l'agencement de guidage de matériau (60) entre une entrée de matériau (62) au-dessus dudit divertisseur et desdites sorties de matériau (64, 66) positionnées en dessous dudit divertisseur et espacées sur des côtés opposés d'une ligne verticale passant à travers l'axe de pivotement dudit divertisseur.

5. Appareil selon l'une des revendications précédentes, dans lequel chacun des châssis de support (24, 26) comprend des éléments de montage verticaux supérieur et inférieur (38, 28) disposés à l'arrière des positions de conteneur, et montés de façon pivotante sur les bras de support pivotants (42, 32).

6. Appareil selon la revendication 5, comprenant en outre un boîtier (20) enfermant le châssis (10, 16, 18), les éléments de montage verticaux supérieur et inférieur (38, 32) s'étendant à travers des ouvertures respectives dans le boîtier.

7. Appareil selon la revendication 6, dans lequel chaque élément de montage vertical inférieur (28) présente une portion (28R) s'étendant vers l'arrière connectée à une portion (28U) s'étendant vers le haut qui est montée tourillonnante de façon pivotante (en 30) au bras de support inférieur associé (32).

8. Appareil selon la revendication 6 ou 7, dans lequel le boîtier comprend une portion de tête en porte-à-faux (20H), et chaque élément de montage vertical supérieur (38) possède une partie (38R) s'étendant vers l'arrière reliée à son châssis de support (24, 26) et une partie s'étendant vers le bas (38D) montée tourillonnante sur le bras de support supérieur associé (42), et dans lequel les éléments de montage verticaux supérieurs (38) sont disposés à l'intérieur de la portion de tête en porte-à-faux (20H) du boîtier (20).

9. Appareil selon l'une des revendications 6, 7 ou 8, comprenant en outre des moyens excluant des particules étrangères (38G, 28G) disposés aux ouvertures dans le boîtier (20) à travers lequel s'étendent les éléments de montage verticaux supérieur et inférieur (38, 28).

10. Appareil selon l'une des revendications précédentes, dans lequel le châssis comprend un élément de châssis de fond (14) présentant des pattes de support (12A, 12B) s'étendant vers le bas à partir de celui-ci, et dans lequel ledit élément de châssis de fond est supporté à un niveau au-dessus des positions de support de fond du conteneur.
